# EUROPEAN PATENT APPLICATION

(11) **EP 2 266 784 A1**
(43) Date of publication of application: **29.12.2010**
(21) Application number: 09400031.2
(22) Date of filing: 22.06.2009
(51) Int. Cl.: B29C 70/08, B29C 70/30, B32B 3/12, B32B 37/14

(54) **Method for producing a sandwich component having a honeycomb core**

(71) Applicant: Eurocopter Deutschland GmbH, 86609 Donauwörth (DE)
(72) Inventor: Weimer, Christian, 81543 München (DE)
(74) Representative: GPI & Associés

(57) **Abstract**

The invention relates to a method for producing composite components having a honeycomb core (2), comprising the process steps of producing a preform (3, 4) having a three-dimensional curved shape, impregnating the preform (3, 4); bringing together the preform (3, 4) with the honeycomb core (2); and jointly hardening partially hardened preform (3, 4) and honeycomb core (2).

## Description

The present invention relates to a method for producing a sandwich component having a honeycomb core.

Fibre-reinforced sandwich components having an intrinsically open core such as, for example, a honeycomb core, which is closed on both sides by a cover layer of fibre composite are known per se and used in various sectors. They are used, for example, in vehicle construction for air and space travel, for shipping and also in motor vehicle and railway vehicle construction. The most important advantages of such components include a very high ratio of strength to weight. They therefore help towards reducing the weight.

WO 2008/028973 discusses methods for producing a fibre-reinforced sandwich component having a honeycomb core. One method is based on the so-called resin transfer moulding (RTM) method. In this method the core with layers of dry, i.e. non-pre-impregnated fibre material, disposed thereon is disposed in a closable mould. The mould consists of two heatable mould halves, whose inner contour corresponds to the outer contour of the finished component. In the closed mould space, liquid resin is supplied to the dry fibre material. The resin is cured by heating the mould. In this case, the resin can be supplied under conditions of excess pressure in the RTM mould or under conditions of vacuum in the RTM mould. The respective pressure difference is used, inter alia, to avoid undesirable air inclusions in the cover layer.

In the RTM method, however, undesirable penetration of liquid resin into the open cells of the honeycomb core must be prevented. To this end, it is known to close the honeycomb core on both sides with a resin-impermeable barrier layer which prevents filling of the honeycomb cells with liquid resin.

The interposed barrier layer is problematical, however, insofar as the connection between honeycomb and cover layer can no longer be achieved directly through the resin of the cover layer.

WO 2008/028973 therefore proposes a method in which a fabric enclosing the honeycomb core is produced. At least on one side on the honeycomb core, from inside to outside, there is disposed a curable adhesive layer, a barrier layer and a fibre layer. The fabric is enclosed in a gastight chamber. A vacuum is produced in the gastight chamber under which the adhesive layer between honeycomb core and barrier layer is hardened or partially hardened so that the honeycomb cells are at least partially evacuated before they are closed by the barrier layer. This is followed by infusion of the fibre layer in a vacuum with a matrix material and the matrix material is hardened in a vacuum.

The method is therefore associated with appreciable expenditure which severely restricts the applicability of the method. Depending on the workpiece, the injection must furthermore be carried out over a wide section which means a restriction with regard to the usability of highly viscous and therefore tough matrix materials. Matrix systems having high toughness thus possibly cannot be produced.

EP 1 197 315 discloses a method for producing a preform (also known as preform) from fibre composite materials. The preform is in this case impregnated with additional resin and hardened. In this case, further resin is injected during the hardening of the preform. In particular, the resin required for this purpose can be applied in the form of a resin film by the so-called resin film infusion method (RFI). However, infusion techniques for infusing liquid resin such as the resin transfer moulding (RTM) or the resin infusion method (RI) can also be used here. The applicability of the respective method depends on the compatibility of the various resin systems used. If resin systems having substantially the same chemical composition are used, these can also be mixed so that different resins can be used in one component.

At the present time, the application of the intrinsically definitely advantageous infusion technology, for example, in the production of helicopter cell shells is not practiced because the application of infusion technology to honeycomb structures in the conventional manner is at best feasible at unjustifiable expense.

As an alternative, an attempt was made to shape foam materials such as Rohacell into a foam core in a light and shear-resistant manner in order in particular to achieve characteristic values of a lightweight structure quality such as those possibly exhibited by aramide honeycombs in a honeycomb core. However, for the same efficiency the foam core has a greater weight than the honeycomb core. Furthermore, the reinforcement of the foam core by possibly inserting pins into the core is very expensive.

The invention takes on board anew the problem unsolved with conventional methods.

The independent claims define the invention under various aspects. The dependent claims define embodiments of the invention.

The invention comprises a method for producing composite components having a honeycomb core, in particular the invention comprises a method for producing fibre-reinforced composite components having a honeycomb core. The method comprises the production of a preform having a three-dimensional curved shape, impregnating the preform, bringing together the preform with the honeycomb core and jointly hardening preform and honeycomb core.

In this case, the preform is preferably partially hardened.

The partial hardening is to a certain extent a preliminary hardening or intermediate hardening which can cross-link and compact the composite component to a certain point. In one embodiment the partially hardened preform forms a so-called semicured prepreg, i.e. a pre-impregnated semifinished product which is hardened to a specific degree. Depending on the embodiment, the preform can have a very simple or simple, three-dimensional curved shape. The method according to the invention makes it possible to produce comparatively thick prepregs, i.e. prepregs having a thickness >0.2 mm. This is particularly the case when the prepregs are produced on the basis of structure-optimised preforms, i.e. for example, having a topology-optimised layer structure, using a dry method of construction.

In one embodiment, creating the preform comprises providing the preform with a matrix. In one embodiment the matrix is highly viscous. Highly viscous is to be understood in this connection as a viscosity of the matrix which makes infusion of the matrix material over long distances, i.e. possibly of the order of magnitude of the composite component, appear disproportionately expensive or possibly even impossible in the conventional manner. On account of the highly viscous matrix used in this embodiment of the method according to the invention, the matrix is particularly tough. The composite component produced using the method is therefore particularly able to withstand stress.

In one embodiment, creating the preform comprises impregnating a cover with the matrix. The cover can be configured as a skin or covering skin. In this embodiment, the cover is draped before the impregnating or the cover is draped both before and after the impregnating. In one embodiment, the cover is disposed substantially in one plane, in particular flat and/or horizontally during the impregnating. In one embodiment, the cover is merely draped after the impregnating. In particular in one embodiment, the cover is draped manually.

In one embodiment the partially hardened preform is finely moulded on the honeycomb core. In particular, the preform is nestled against the honeycomb core. One surface of the preform is brought in contact with one surface of the honeycomb core which is then no longer raised as far as possible. The partial hardening of the preform can possibly take place using comparatively simple tools because a comparatively high accuracy is only required following the hardening when the partially hardened preform is finely moulded.

One embodiment of the method according to the invention comprises ending the partial hardening of the preform before the preform is hardened on one surface of the preform. In this embodiment, depending on the materials used for the honeycomb core and the preform, it is possible to join preform and honeycomb core at surfaces in contact with one another. The connection can occur in particular if the materials flow into one another and then harden.

In one embodiment, material is softened on the surface of the preform facing the honeycomb core before the connection of the preform to the honeycomb core is made, in particular before material on the surface of the preform facing the honeycomb core and material on the surface of the honeycomb core facing the preform flow into one another and/or jointly harden. By using partially hardenable materials, in particular by means of so-called PRE-CURE materials, in one embodiment other connections such as possibly stringer/frame skin or the like can be implemented.

In one embodiment the method comprises compacting the preform to a predefined and/or desired thickness. The compacting is associated with the partial hardening of the preform. The desired thickness is preferably achieved precisely at the end of the partial hardening.

In one embodiment, the preform is connected to the honeycomb core during the joint hardening. In one embodiment the connection is accomplished as a result of a hardening of materials at surfaces of the preform and the honeycomb core in contact with one another. In this embodiment, the connection of preform and honeycomb core can be produced without an adhesive film or an adhesive foil.

Under another aspect, the invention comprises a composite component having a honeycomb core and a cover, skin or covering skin. The cover covers at least one section of the honeycomb core. In one embodiment, the honeycomb core is covered by the cover on both sides, wherein the cover can be configured as multi-piece, for example, as a first skin and a second skin, or encloses or surrounds the honeycomb core in one piece. In one embodiment, the composite component has no adhesive film between the cover and the honeycomb core. For example, epoxy resin materials such as, for example, Hexels RTM6 or other prepreg resins which have sufficient fluidity can be used. In particular, no adhesive film is found between the cover and the section of the honeycomb core covered by the cover.

In one embodiment, the composite component is produced using the method according to the invention. Merely for the sake of completeness it is pointed out that it usually cannot be identified on the "finished" composite component whether this has been worked with or without adhesive film.

Under a further aspect, the invention comprises a helicopter cell having a composite component according to the invention and even is such a component itself. Further examples are, for example, helicopter platings or also sub-floor group crash frames with sandwich elements in areas at risk of dents. A particular advantage is especially the fact that the method according to the invention makes it possible to produce such components, for example, the aforesaid components, at more favourable cost on account of the further automation.

Under a further aspect, the invention comprises a vehicle having a composite component according to the invention. The vehicle is possibly configured as an aircraft, for example as a helicopter or an airplane or as a marine craft such as possibly a sailing or motor yacht. In a further embodiment, the vehicle is configured as a rail vehicle or as a motor vehicle. In one embodiment the motor vehicle has an electrical drive.

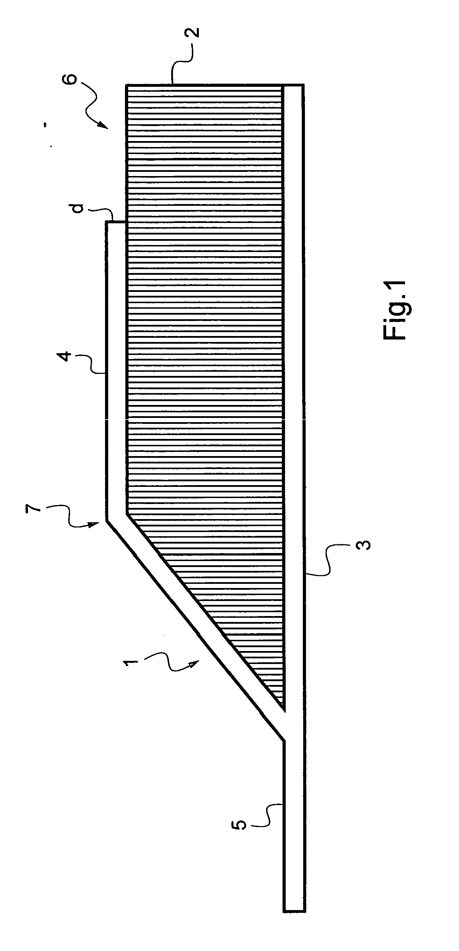

An exemplary embodiment of the invention will be explained in detail hereinafter with reference to Fig. 1 which is a schematic diagram of a longitudinal section through a composite part before any hardening.

In the exemplary embodiment of the invention, a composite part 1 is produced. The composite part 1 produced according to the exemplary embodiment comprises a honeycomb core 2. The honeycomb core 2 has a flat surface, shown in Fig. 1 on an underside of the honeycomb core 2, having honeycomb openings and base surfaces of walls which separate the individual honeycombs from one another. The honeycomb core 2 has a curved surface, shown in Fig. 1 on an upper side of the honeycomb core 2, having honeycomb openings and abutting surfaces of the walls. In particular, the curved surface has a curvature in a curve section 7. The curved surface of the honeycomb core 2 lies substantially opposite the flat surface of the honeycomb core 2.

The honeycomb openings and the base surfaces of the walls in the flat surface of the honeycomb core 2 are covered by a first skin 3. In this case, the first skin 3 abuts substantially in one plane against the flat surface of the honeycomb core 2. In particular, a surface of the first skin 3 facing the honeycomb core 2 is connected directly to base surfaces of the walls of the honeycomb core 2 in the surface of the honeycomb core 2 which is facing the first skin 3.

The honeycomb openings and the abutting surfaces in the curved surface of the honeycomb core 2 are covered by a second skin 4. In this case, the second skin 4 nestles against the curved surface of the honeycomb core 2 in the curve section 7. In particular, a surface of the second skin 4 facing the honeycomb core 2 is directly connected to abutting surfaces of the walls of the honeycomb core 2 in the surface of the honeycomb core 2 facing the second skin 4.

In an edge section 5 the second skin 4 lies directly on the first skin 3 and in particular, the second skin 4 is connected to the first skin 3 in the edge section 5. The connection of the second skin 4 to the first skin 3 in the edge section 5 and to the honeycomb core 2 defines a curved connecting surface in the composite component 1.

In an open section 6 the honeycomb openings and abutting surfaces of the walls of the honeycomb core 2 are exposed. In the open section 6 in particular the second skin 4 does not cover the honeycomb core 2.

The first skin 3 and the second skin 4 each have a desired thickness d. The production of the composite part 1 according to the exemplary embodiment proceeds as follows:

Firstly, the first skin 3 and second skin 4 are each prepared to give a preform for processing. For the first skin 3 a first fibre mat, for example, a sewn tailored reinforcement (TR = tailored reinforcing structure) is impregnated in resin, i.e. impregnated with matrix material and laid out substantially in one plane. For the second skin 4 a second fibre mat is impregnated with a resin. The impregnated second skin 4 is curved in such a manner that the impregnated second skin 4 has a shape which approximately corresponds to the curved connecting surface which is defined as described above in the composite component 1. In one variant of the exemplary embodiment, the second skin 4 is initially curved and then impregnated. In another variant of the exemplary embodiment the second skin 4 is initially partially impregnated, then curved and finally further impregnated.

The first impregnated fibre mater and the second impregnated fibre mat run separately from one another or jointly through a partial hardening or pre-hardening step which can also be called "pre cure" and is controlled in such a manner that only a partial hardening of the resin takes place so that the resin merely exhibits a certain cross-linking. In particular, reactive groups of the resin remain on one surface of the impregnated fibre mat. The partially hardened flat first fibre mat forms a first preform in the form of the first skin 3. The partially hardened curved second fibre mat forms a second preform in the form of the second skin 4.

The honeycomb core 2 is placed with its flat surface on the first skin 3 so that the base surfaces of the walls of the honeycomb core 2 contact the surface of the first skin 3 which is not yet hardened. In one variant of the exemplary embodiment the combination of honeycomb core 2 and first skin 3 is now subjected to a further hardening step wherein the first skin 3 is further hardened or completely hardened depending on the control of the process step and at the same time the base surfaces of the walls of the honeycomb core 2 become connected to the surface of the first skin 3.

The second skin 4 is placed on the entirety of the honeycomb core 2 on the first skin 3 in such a manner that the surface of the second skin 4 which has not yet hardened touches the abutments of the walls of the honeycomb core 2 which lie opposite the first skin 3 or is disposed at least in the vicinity of these abutments. Furthermore, in the edge section the surface of the second skin 4 which has not yet hardened does not touch the surface of the first skin 3 which has not yet hardened. At the same time, the second skin 4 does not cover the honeycomb core 2 in the open section 6. For example, by pressing with the hand, a fine moulding of the second skin 4 is achieved in such a manner that the second skin 4 nestles closely against the honeycomb core 2. The composite part 1 in the form of the entirety of first skin 3, honeycomb core 2 and second skin 4 thus has a laminate structure.

One variant of the exemplary embodiment is similar to a prepreg method insofar as the preform is initially infiltrated and preliminarily hardened or partially hardened with simple tools and/or with low tolerance requirement and/or low heat requirement. In this case, similarly to prepreg methods an adjustment of a predefined thickness and/or a predefined layer structure and/or a predefined topology takes place. Furthermore, a predefined residual reactivity can be achieved. The laminate structure is then produced as in a prepreg method.

In one variant of the exemplary embodiment, the entirety of first skin 3, honeycomb core 2 and second skin 4 is now initially subjected to a thermal softening step, possibly in a fast heating process in which matrix material is softened in the area of the surfaces of first and second skin 3 or 4 facing the honeycomb core 2 and the base surfaces or abutting surfaces of the walls of the honeycomb core 2. In particular, a connection to the honeycomb is achieved by a partial re-softening of the matrix.

In one variant of the exemplary embodiment, material in the area of the surfaces of first and second skin 3 or 4 facing the honeycomb core 2 and material of the base surfaces or abutting surfaces of the walls of the honeycomb core 2 flows into one another or these materials are fused with one another.

The entirety of first skin 3, honeycomb core 2 and second skin 4 passes through a final hardening step (for example, called "final cure") in which material in the area of the surfaces of first and second skin 3 or 4 facing the honeycomb core 2 and the base surfaces or abutting surfaces of the walls of the honeycomb core 2 forms a compound with one another, in particular by cross-linking.

In one variant of the exemplary embodiment the final hardening step is controlled in such a manner that the first skin 3 and the second skin 4 compact during hardening and have a predefined desired thickness d at the end of the hardening step. In one variant of the exemplary embodiment the hardening takes place under pressure.

### REFERENCE LIST

- 1: Composite component
- 2: Honeycomb core
- 3: First skin
- 4: Second skin
- 5: Edge section
- 6: Open section
- 7: Curve section

- d: Thickness

## Claims

1. A method for producing composite components having a honeycomb core (2), comprising:
- producing a preform (3, 4) having a three-dimensional curved shape;
- impregnating the preform (3, 4);
- bringing together the preform (3, 4) with the honeycomb core (2);
- and jointly hardening preform (3, 4) and honeycomb core (2).

2. The method according to claim 1,
**characterised in that** the preform (3, 4) is partially hardened.

3. The method according to claim 1 or 2,
**characterised by**:
- creating the preform (3, 4) whilst providing the preform (3, 4) with a matrix.

4. The method according to claim 3,
**characterised in that** the matrix is highly viscous.

5. The method according to the preceding claim, **characterised in that** creating the preform (4) comprises:
- impregnating a cover with the matrix and
- then draping the cover.

6. The method according to claim 5,
**characterised by** accomplishing the draping of the preform (4) manually.

7. Method according to any one of the claims 1 to 6, **characterised by**:
- fine moulding of the partially hardened preform (4) on the honeycomb core (2).

8. The method according to any one of the claims 1 to 7, **characterised by**:
- ending the partial hardening of the preform (3, 4) before the preform (3, 4) is hardened on one surface of the preform (3, 4).

9. The method according to any one of the claims 1 to 8, **characterised by**:
- compacting the preform (3, 4) to a predefined thickness before ending the partial hardening of the preform (3, 4).

10. The method according to any one of the claims 1 to 9, **characterised by**:
- connecting the preform (3, 4) to the honeycomb core (2) during the joint hardening.

11. A composite component (1) having a honeycomb core (2) and a cover (3, 4) which covers at least one section of the honeycomb core (2),
**characterised by** an absence of an adhesive film between the cover and the section of the honeycomb core covered by the cover.

12. The composite component according to the preceding claim,
**characterised in that** the composite component (1) is produced using the process steps according to one of the preceding process claims.

13. A helicopter cell
**characterised by** a composite component (1) according to claim 11 or 12.

14. A vehicle, in particular an aircraft,
**characterised by** a composite component (1) according to claim 11 or 12.
